# EUROPEAN PATENT SPECIFICATION

(11) **EP 1 731 622 B1**
(45) Date of publication and mention of the grant of the patent: **28.07.2010**
(21) Application number: 05720831.6
(22) Date of filing: 15.03.2005
(51) Int. Cl.: C22B 23/00, C22B 3/08, B01D 21/01, B01D 21/02

(54) **LEACH METHOD FOR RECOVERING NICKEL OR COBALT**
LAUGVERFAHREN ZUR GEWINNUNG VON NICKEL ODER KOBALT
MÉTHODE DE LIXIVIATION POUR L'EXTRACTION DU NICKEL OU DU COBALT

(30) Priority: 31.03.2004 JP 2004108208
(43) Date of publication of application: 13.12.2006
(73) Proprietor: Pacific Metals Co., Ltd., Chiyoda-ku, Tokyo 100-0004 (JP)
(72) Inventor: YAKUSHIJI, Hiromasa, c/o Pacific Metals Co., Ltd., Hachinohe-city, Aomori 0318617 (JP); ITO, Seiji, c/o Pacific Metals Co., Ltd., Hachinohe-city, Aomori 0318617 (JP); MIURA, Kazuhiko, c/o Pacific Metals Co., Ltd., Hachinohe-city, Aomori 0318617 (JP); SHIMAMORI, Mitsuo, c/o Pacific Metals Co., Ltd., Hachinohe-city, Aomori 0318617 (JP)
(74) Representative: Nargolwalla, Cyra
(86) International application number: PCT/JP2005/004576
(87) International publication number: WO 2005/098060

(56) References cited:
- WO-A-01/32943
- JP-A- 60 075 536
- JP-A- 2003 514 109
- US-A- 4 548 794

## Description

### TECHNICAL FIELD

This invention relates to a process for recovering nickel or cobalt from an oxide ore.

### BACKGROUND ART

As known processes for leaching nickel or cobalt from an oxide ore containing the metal using sulfuric acid, an atmospheric leaching process where a sulfuric acid solution containing nickel or cobalt is obtained at an atmospheric pressure (Non-Patent Document 1, Non-Patent Document 2 Patent Document 5) and a pressure leaching process where a sulfuric acid solution containing nickel or cobalt is obtained at a high temperature and a high pressure (Non-Patent Document 3) are known.
Non-Patent Document 1: Proc. Australas. Inst. Metall. No. 265, March. 1978
Non-Patent Document 2: The metal. Soc, 1988 p447
Non-Patent Document 3: Journal of Metals. March, 1960, P206
Non-Patent Document 4: ISIJ International Vol43 (2003) No2 p181 to p186
Patent Document 5: WO 01/32943

### DISCLOSURE OF THE INVENTION

However, as described in Non-Patent Document 2, during leaching an oxide ore containing nickel, cobalt, magnesium and iron by sulfuric acid at an atmospheric pressure, not only nickel and cobalt but also iron are leached; specifically, attempting to leach each of nickel and cobalt to 80 wt% or more, iron is also leached to 15 wt% or more. In general, since an oxide ore containing nickel or cobalt contains iron 10 to 40 times as much as nickel, the process described in the publication may lead to increase in consumption of sulfuric acid in leaching and a higher iron concentration in a leachate, which may lead to a higher cost for removing the iron. Thus, the process has a problem in a cost.

Non-Patent Document 4 (a recent research report on atmospheric leaching) has described that under a mixed gas atmosphere of CO/CO₂ (30/70 vol%) and a temperature of 700 °C, nickel and cobalt compounds may be reduced into metals and iron may be converted into magnetite, to leach 80 wt% to 90 wt% of nickel and 20 wt% to 30 wt% of iron at a temperature of 30 to 70 °C. This process, however, requires leaching at a temperature of 700 °C under a reduction atmosphere, leading to significant energy consumption. Thus, the process has many problems in its practical use.

On the contrary, Non-Patent Document 3 has described that an oxide ore can be pressure-leached by sulfuric acid at a high temperature and a high pressure, to achieve an improved leaching rate for nickel or cobalt while minimizing iron leaching. Therefore, it results in reduction in the amount of sulfuric acid and in a cost for removing iron. However, since the process is sulfuric-acid leaching at a high temperature and a high pressure, the use of an autoclave is essential and the autoclave should be made of an expensive material such as titanium. Also, in comparison with leaching at an atmospheric pressure, an energy consumption is increased. Furthermore, since a scale adheres and grows on the inside wall of the autoclave, an operation should be sometimes stopped for removing the scale, leading to reduction in an operation rate.

In view of the above circumstances, an objective of the present invention is to provide a process for recovering nickel or cobalt from an oxide ore containing nickel, cobalt and iron, by which while achieving a higher leaching rate for nickel or cobalt with a reduced amount of sulfuric acid, a solution containing a few of iron can be obtained, resulting in reduction in a cost for removing iron.

According to the present invention, there is provided a process for recovering nickel or cobalt from an oxide ore containing nickel or cobalt and iron, comprising: a leaching step where nickel or cobalt is leached from the oxide ore using sulfuric acid and a sodium salt to obtain a sulfuric acid leachate containing nickel or cobalt and a leaching residue; a reaction step where the sulfuric acid leachate containing the leaching residue is reacted with magnesium - containing oxide substance for adjusting a pH to obtain a reaction solution containing nickel or cobalt and a reaction residue containing iron; and a neutralization step where the reaction solution containing the reaction residue is neutralized with a neutralizing agent to obtain a neutralization solution containing nickel or cobalt and a neutralization residue containing iron,
**characterized in that** the weight ratio between sulphuric acid added in the leaching step and the oxide ore is from 0.5 to 0.8 and the weight ratio between sodium salt added in the leaching step and oxide ore is from 0.01 to 0.05.

According to the present invention, in the leaching step, sulfuric acid and a sodium salt are used to form Natrojarosite, which is then precipitated by adjusting pH using magnesium to reduce an iron concentration in a reaction solution in the reaction step. It is, therefore, not necessary to use a large amount of a neutralizing agent for reducing an iron concentration in a reaction solution in the neutralization step. Thus, in the step of recovering nickel or cobalt, a higher leaching rate for nickel or cobalt can be achieved with a smaller amount of sulfuric acid while reducing a cost for removing iron.

Also, the process may comprise classifying the oxide ore into a small particle oxide ore and a large particle oxide ore containing magnesium before the leaching step; wherein leaching nickel or cobalt from the small particle oxide ore in the leaching step and the reacting sulfuric acid leachate containing the leaching residue with magnesium contained in the large particle oxide ore to adjust a pH in the reaction step. Thus, a further higher leaching rate for nickel or cobalt can be achieved with a smaller amount of sulfuric acid while further reducing a cost for removing iron.

Also, the process may further comprise, after the neutralization step, separating the neutralization solution and the neutralization residue by solid-liquid separation using a thickener with a flocculant.

In the present invention, both the leaching step and the reaction step may be performed at a temperature of 90 °C or higher. Thus, a leaching rate for nickel or cobalt can be further improved. Furthermore, both the leaching step and the reaction step may be performed at an atmospheric pressure. Thus, increase in a facility cost can be prevented.

As used herein, the term "atmospheric pressure" encompasses a pressure near the atmospheric pressure.

Also, Magnesium used in the reaction step may be magnesium contained in the oxide ore. Thus, a further higher leaching rate for nickel or cobalt can be achieved while reducing a cost for removing iron further.

Also, a sodium salt may be a sodium salt contained in marine water. Thus, a higher leaching rate for nickel or cobalt can be achieved while reducing a cost for removing iron.

According to the present invention, in a process for recovering nickel or cobalt from an oxide ore containing nickel, cobalt and iron, by obtaining a solution containing a small amount of iron with a small amount of sulfuric acid while achieving a higher leaching rate for nickel or cobalt, a process cost for removing iron can be reduced.

### BRIEF DESCRIPTION OF THE DRAWINGS

The above-mentioned objective and other objectives, features and advantages will be more clearly understood with reference to suitable embodiments described below and the accompanied drawing.

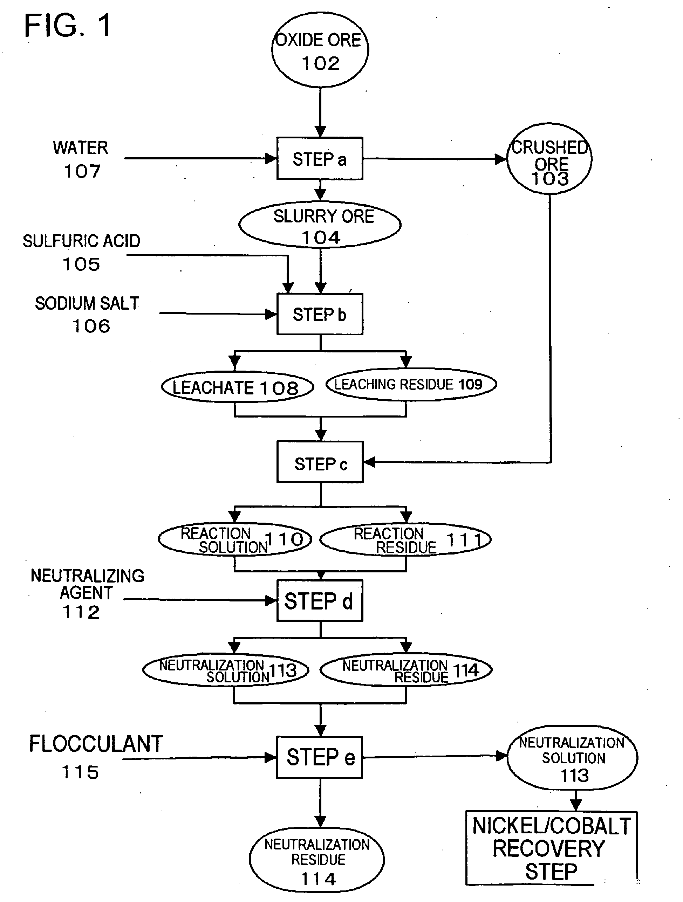

FIG. 1 is a flow chart illustrating a process in an embodiment according to the present invention.

### BEST MODE FOR CARRYING OUT THE INVENTION

An embodiment of the present invention will be described with reference to the drawing and tables. Herein, an amount for quantity consumed and quantity added stands for the quantity consumed and the quantity added based on their weight, respectively.

In the present embodiment, for example, a so-called limonite ore may be used. Herein, the term "so-called limonite ore" refers to an ore containing nickel, cobalt, magnesium and iron as their oxides. Also, for example, as a neutralizing agent, a ferronickel slag may be used. Herein, the term "ferronickel slag" refers to a slag generated during using a material generally known as a saprolite ore with a nickel content of 2 wt% or more and preparing ferronickel by pyrometallurgical process.

There are no specific definitions on a composition range between a limonite ore and a saprolite ore, but Table 1 shows compositions of an oxide ore which is called a limonite ore, and a ferronickel slag. (Table 1)

**Table 1**

| Composition (wt%) | | | | | |
|---|---|---|---|---|---|
| | Ni | Co | Fe | Mg | Mg/Fe |
| Limonite ore | 1.0-2.0 | 0.1-0.2 | 20-50 | 2.5-15 | 0.125-0.75 |
| Ferronickel slag | ≤0.1 | ≤0.01 | ≤10 | 15-25 | ≥1.5 |

Fig. 1 is a flow chart illustrating process for recovering of nickel and cobalt from an oxide ore containing nickel, cobalt and iron.

Hereinafter, there will be described a process flow in the present embodiment.

First, in step a (classification step), an oxide ore 102 is classified into an over-size ore and an under-size ore. The under-size ore is treated with water 107 to obtain a slurry ore 104, and the over-size ore is crushed into a crushed ore 103.

Next, in step b (leaching step), the slurry ore 104 is leached with sulfuric acid 105 to obtain a sulfuric acid leachate 108 containing nickel and cobalt and a leaching residue 109. Here, the leaching residue 109 contains Natrojarosite generated by a reaction of iron leached from the slurry ore 104 with sulfuric acid 105 and a sodium salt 106.

Then, in step c (reaction step), by reacting free sulfuric acid in the sulfuric acid leachate 108 containing the leaching residue 109 with magnesium contained in the crushed ore 103 obtained by crushing in the classification step, free sulfuric acid is consumed for adjusting a pH to obtain a reaction solution 110 and a reaction residue 111. By the pH adjustment, by precipitating Natrojarosite in the reaction residue 111, an iron concentration in the reaction solution 110 can be reduced.

Next, in step d (neutralization step), a neutralizing agent 112 is added to the reaction solution 110 containing the reaction residue 111 for pH adjustment to obtain a neutralization solution 113 and a neutralization residue 114. Here, since an iron concentration has been reduced in the reaction solution 110 by precipitating Natrojarosite in the previous reaction step, the added amount of the neutralizing agent 112 can be reduced.

Subsequently, in step e (solid-liquid separation step), a flocculant 115 is added to the neutralization solution 113 containing the neutralization residue 114 and then by employing a thickener, solid-liquid separation is performed to separate the neutralization solution 113 and the neutralization residue 114.

Next, the neutralization solution is processed in the step of recovering nickel and cobalt to recover nickel and cobalt.

Hereinafter, there will be described the detailed each steps.

### Step a : Classification step

An oxide ore 102 such as a limonite ore containing nickel, cobalt, magnesium and iron is classified into an over-size ore and an under-size ore by a simple apparatus such as a vibrating screen. The under-size ore is treated with water 107 to obtain a slurry ore 104, and the over-size ore is crushed by an apparatus such as a ball mill to obtain a crushed ore 103. Although there are no particular restrictions to a classification size by a vibrating screen, for example, a mesh of 0.5 mm to 2 mm both inclusive may be used from the view of improving process stability.

When classifying the oxide ore 102 by a screen with a mesh of about 0. 5 mm to 2 mm, an under-size ore tends to have a higher iron content and a lower magnesium content, while an over-size ore tends to have a lower iron content and a higher magnesium content.

Water 107 may be, in addition to river water or ground water commonly used, marine water. Here, when applying a process according to the present embodiment, the process may be carried out around a mine from the view of an economical efficiency including a cost. Looking around an area where the mine is operated, it is not always easy to ensure adequate water such as river water and ground water. Furthermore, by using marine water as water 107, a sodium salt contained in the marine water may be utilized to obtain an effect to be able to control the residual amount of iron leached from an oxide ore in a leachate or a reaction solution in the leaching step or the reaction step as a later step.

### Step b: Leaching process

The slurry ore 104 obtained in step a can be leached, for example, with sulfuric acid 105 at an atmospheric pressure and a temperature of not less than 90 °C and not more than 100 °C, to provide a sulfuric acid leachate 108 containing nickel, cobalt, magnesium and iron and a leaching residue 109.

Leaching at a 90 °C or higher can improve a leaching rate for nickel and cobalt in the slurry ore 104. Thus, a leaching time for nickel and cobalt in the slurry ore 104 can be reduced while increasing a leaching rate for nickel and cobalt. By leaching of nickel and cobalt contained in the slurry ore 104 at 100 °C or lower, leaching nickel and cobalt at a temperature equal to or lower than the boiling point of water can be performed. Thus, a container of the apparatus for pressurizing an apparatus for leaching nickel and cobalt may not be pressurized. Consequently, an increase in a facility cost can be prevented.

Here, although a leaching temperature is defined as 90 °C or higher in the above description, for instance, a temperature of 70 °C or higher may be appropriately selected. Alternatively, nickel and cobalt in the slurry ore 104 may be leached at more than 100 °C. Also, nickel and cobalt in the slurry ore 104 may be leached under a pressure other than an atmospheric pressure.

The added amount of sulfuric acid may be 0.5 to 0.8 times of that of the used oxide ore 102. With sulfuric acid in 0.5 times or more amount, nickel and cobalt can be sufficiently leached, and with sulfuric acid in about 0.8 times amount, a leaching rate for nickel and cobalt is in equilibrium. Therefore, using sulfuric acid in 0.8 times or less amount, the amount of excessive sulfuric acid (free sulfuric acid) may be reduced. Thus, while maintaining a leaching rate for nickel and cobalt from an oxide ore, increase in a cost for recovering nickel and cobalt can be reduced.

Also, in step b, the under-size ore classified in the classification step is used because of the reason described below. In comparison with the crushed ore 103 from the over-size ore, leaching of nickel and cobalt in the oxide ore is more difficult in the under-size ore. Furthermore, since the crushed ore 103 from the over-size ore contains magnesium in a higher content compared to the under-size ore, free sulfuric acid used for leaching may be consumed. Thus, excessive sulfuric acid is first used to leach more nickel and cobalt in the oxide ore for improving a recovery rate of nickel and cobalt.

When using river water or ground water as water 107 in step a, a sodium salt 106 such as sodium sulfate and sodium chloride is added in step b. Thus, an added content of sodium derived from the sodium salt 106 may be 0.01 to 0.05 times of a content of an oxide ore 102. On the other hand, when using marine water as water 107, an additional sodium salt is not necessary because marine water contains sodium in about 10 g/L. Thus, while maintaining a leaching rate for nickel and cobalt from an oxide ore, increase in a cost for recovering nickel and cobalt can be further reduced.

In the presence of 0.01 times amount of added sodium, iron leached from the oxide ore can be reacted with sodium sulfate in the sulfuric acid leachate 108 to reduce an iron concentration in the sulfuric acid leachate 108.

It may be assumed that sodium can control an iron concentration in a sulfuric acid leachate in accordance with chemical reaction equations (1) to (3).

FeO (OH)·(oxide ore)+3/2H₂SO₄ = 1/2Fe₂(SO₄)₃·(liquid)+2H₂O (1)

Fe₂(SO₄)₃·(liquid)+1/3Na₂SO₄+4H₂O = 2/3NaFe₃(SO₄)₂(OH)₆·(solid) +2H₂SO₄ (2)

Fe₂(SO₄)₃·(liquid)+2/3NaCl+4H₂O = 2/3NaFe₃(SO₄)₂(OH)₆·(solid) +2/3HCl+5/3H₂SO₄ (3)

That is, iron in the oxide ore is leached with excessive sulfuric acid and combined with sodium in the sulfuric acid leachate to generate Natrojarosite, resulting in precipitation of part of iron leached. Thus, iron leached from the oxide ore is contained in a leachate, so that increase in its amount involved in the next reaction step can be reduced. So, in reaction step, iron can be sufficiently removed by precipitation as Natrojarosite. Consequently, in the neutralization step after the reaction step, increase in a cost for precipitating iron in a neutralization solution can be prevented. As a result, increase in a cost for recovering nickel and cobalt from the oxide ore can be prevented.

Also, with sodium added in about 0.05 times amount, a generation rate of Natrojarosite and a precipitation rate of Natrojarosite are in equilibrium. Therefore, by adding sodium in 0.05 times amount or less, addition of an excessive amount of sodium can be prevented, resulting in preventing increase in a cost for recovering nickel and cobalt from the oxide ore.

A leaching time may be 1 hour to 10 hours both inclusive; for example, 3 hours to 6 hours. A facility for the leaching step may be a vessel with a stirrer commonly used, which may be made of, for example, stainless steel or a rubber-lined steel. Therefore, nickel and cobalt can be leached from the oxide ore 102 without using, for example, a titanium-lined autoclave which is used in pressure leaching at a high temperature and a high pressure, resulting preventing increase in a cost for recovering nickel and cobalt.

### Step c: Reaction step

The sulfuric acid leachate 108 and the leaching residue 109 obtained in step b is reacted with the crushed ore 103 from the over-size ore obtained in step a, for instance, at an atmospheric pressure and a temperature of not less than 90 °C and not more than 100 °C in accordance with equations (4) to (7). In accordance with a reaction equation described later, a reaction solution 110 containing nickel, cobalt, magnesium and a small amount of iron and a reaction residue 111 can be obtained.

The crushed ore 103 may be added as a solid as it is, or alternatively added as a slurry with water. In this step, water may be selected from river water, ground water and marine water. Also, the water may contain a sodium salt 106 such as sodium sulfate and sodium chloride.

The reaction can be performed at a temperature of 90 °C or higher to improve a leaching rate of nickel and cobalt contained in the crushed ore 103. Also, an efficiency for removing iron leached in step b as Natrojarosite by precipitation can be improved. Furthermore, the reaction at a temperature of 100 °C or lower may be a reaction in accordance with a chemical equation described later at a temperature equal to or lower than the boiling point of water. It is, therefore, not necessary to pressurize a reaction container in an apparatus for the reaction. Consequently, increase in a facility cost can be prevented.

Here, at a leaching temperature lower than 90 °C or higher than 100 °C, the reaction may be performed as a reaction in accordance with a chemical equation described later. Also, the reaction in accordance with the chemical equation described later may be performed at a pressure other than an atmospheric pressure.

In the present embodiment, an iron concentration in the sulfuric acid leachate 108 in step b is 30 g/L to 90 g/L. Although free sulfuric acid is contained in 30 g/L or more, the free sulfuric acid reacts with magnesium contained in the crushed ore 103 to reduce an iron concentration to 1/10 or less and a free sulfuric acid concentration to 1/3 or less, respectively, compared with those in the sulfuric acid leachate 108 before the reaction.

The reason may be explained by chemical reactions (4) to (7).

H₂SO₄ (free sulfuric acid) + MgO (oxide ore) = MgSO₄ (liquid) + H₂O (4)

Fe₂(SO₄)₃·(liquid) + 1/3Na₂SO₄ + 4H₂O = 2/3NaFe₃(SO₄)₂(OH)₆·(solid) + 2H₂SO₄ (5)

Fe₂(SO₄)₃·(liquid) + 2/3NaCl + 4H₂O = 2/3NaFe₃(SO₄)₂(OH)₆·(solid) + 2/3HCl + 5/3H₂SO₄ (6)

Fe₂(SO₄)₃·(liquid) + 4H₂O = 2FeO (OH)·(solid) + 3H₂SO₄ (7)

Specifically, in accordance with equation (4), free sulfuric acid in the sulfuric acid leachate 108 reacts with magnesium contained in the crushed ore 103 to reduce the amount of free sulfuric acid, resulting in increase of pH of the solution. Thus, as a pH of the liquid is increased, Natrojarosite and Goethite are generated in accordance with equations (5) to (7), resulting in precipitation of iron.

Iron and magnesium contained in the oxide ore 102 may allow the above reaction to more efficiently proceed. For example, when a component ratio of magnesium/iron is 0.125 or more, the amount of iron contained in the oxide ore 102 is relatively smaller, so that in accordance with equation (1), a relatively smaller amount of iron is leached from the oxide ore in the leaching step. Thus, an iron concentration in the reaction solution can be also reduced. Furthermore, since a relatively larger amount of magnesium is contained in the oxide ore 102, the amount of magnesium reacting with free sulfuric acid brought from the sulfuric acid leachate 108 into the reaction step is relatively larger. Therefore, in accordance with the reaction of equation (4), free sulfuric acid in the sulfuric acid leachate 108 can be sufficiently consumed with magnesium.

As described above, iron and magnesium contained in the oxide ore 102 may allow iron to be sufficiently precipitated in accordance with equations (5) to (7), resulting in reduction in an iron concentration remaining in the reaction solution 110. Thus, the amount of iron remaining in the reaction solution 110 and thus brought in the neutralization step may be reduced. Therefore, increase in a cost for precipitating iron in the neutralization step may be prevented. As a result, increase in a cost for recovering nickel and cobalt can be prevented.

There is not a particular upper limit to a component ratio of magnesium/iron; for example, 0.75 or more may be acceptable. Here, the oxide ore 102 used in the present embodiment is a limonite ore containing iron and magnesium in 20 wt% to 50 wt% and 2.5 wt% to 15 wt%, respectively. Thus, a component ratio of magnesium/iron is never 0.75 or more.

Also, in step c, the reason why the crushed ore 103 from the over-size ore is used is the crushed ore 103 from the over-size ore contains more magnesium than the under-size ore so that the reactions of equations (4) to (7) more effectively proceed. A reaction time may be 3 hours to 10 hours both inclusive or 4 hours to 6 hours both inclusive; that is, the reactions of equations (4) to (7) can be completed in a shorter time than the case where an oxide ore before classification is used. Here, since the crushed ore 103 from the over-size ore contains nickel and cobalt, free sulfuric acid may be reacted with magnesium to adjust a pH while leaching nickel and cobalt in the crushed ore 103 to further improve a recovery rate for nickel and cobalt. Thus, while preventing increase in a cost for recovering nickel and cobalt, a recovery rate for nickel and cobalt can be further improved.

A facility for this reaction may be a container with a stirrer commonly used, which may be made of, for example, stainless steel or a rubber-lined steel. Therefore, the reaction in this step can be performed without using an expensive facility, for example, a titanium-lined autoclave which is used in a reaction at a high temperature and a high pressure, resulting in preventing increase in a cost for recovering nickel and cobalt.

Furthermore, this step may be performed using a ferronickel slag that contains nickel in a relatively higher content among some ferronickel slag used in the neutralization step, together with the crushed ore 103 from the over-size ore. In this case, the slag may be used in a range such that a final pH during the reaction is less than 3. With a pH of less than 3, the solution contains free sulfuric acid, which can prevent reduction in a leaching efficiency for nickel from an oxide ore.

### Step d: Neutralization step

By using the reaction solution 110 and the reaction residue 111 obtained in step c and a neutralizing agent 112, a pH may be adjusted to 2 to 6 both inclusive, or alternatively, a neutralization reaction may be performed at a pH within a range of 3 to 5 both inclusive. Thus, there are obtained a neutralization solution 113 with an iron concentration of 1 g/L or less which also contains nickel, cobalt and magnesium, and a neutralization residue 114. Here, with a pH of 2 or higher, iron may be sufficiently precipitated. With a pH of 6 or lower, most of iron can be removed by precipitation while preventing coprecipitation of nickel and cobalt. Thus, a recovery rate for nickel and cobalt can be improved.

There are no particular restrictions to a pressure in this step. For example, a neutralization reaction may be performed using the reaction solution 110, the reaction residue 111 and the neutralizing agent 112 at an atmospheric pressure, or alternatively at a pressure other than an atmospheric pressure.

As the neutralizing agent 112 include hydroxides of an alkali metal such as sodium hydroxide; carbonates of an alkali metal such as sodium carbonate; hydroxides of an alkaline earth metal such as calcium hydroxide and magnesium hydroxide; oxides of an alkaline earth metal such as calcium oxide and magnesium oxide; carbonates of an alkaline earth metal such as calcium carbonate and magnesium carbonate, which are commonly used, may be employed. Also, a ferronickel slag having a composition shown in Table 1 may be used. Further, the above neutralizing agents may be used alone or in combination of two or more.

As used herein, the term "ferronickel slag" refers to a slag containing magnesium obtained during smelting ferronickel using a magnesium-containing ore containing nickel in 2 wt% or more by pyrometallurgical smelting process. The amount of a ferronickel slag generated by pyrometallurgical smelting process is about 30 to 35 parts to 1 part of nickel 1, but only a part of the slag is effectively used.

By using, for example, a ferronickel slag containing magnesium as a neutralizing agent 112, magnesium contained in the ferronickel slag can be effectively utilized as a neutralizing agent while neutralizing the reaction solution 110 and the reaction residue 111. Thus, while effectively utilizing resources, increase in a cost for recovering nickel and cobalt can be prevented.

Also, in addition to a ferronickel slag, any agent such as calcium hydroxide, magnesium hydroxide, calcium oxide, magnesium oxide, calcium carbonate and magnesium carbonate can be used as the neutralizing agent 112 as long as it can neutralize the reaction solution 110 and the reaction residue 111.

### Step e: Solid-liquid separation process

The neutralization solution 113 and the neutralization residue 114 obtained in step d are separated by adding a flocculant 115. The flocculant 115 may be, for example, a polymer flocculant. The solid-liquid separation may be performed by a commonly used thickener method; specifically, by countercurrent washing method with a 6 or more stage thickener. Thus, the neutralization solution 113 and the neutralization residue 114 are efficiently separated into a solid and a liquid such that nickel and cobalt in the neutralization solution is recovered in a high yield of 99 wt% or more and the neutralization solution 113 containing nickel, cobalt and magnesium contains iron in a low concentration of 1 g/L or less.

The flocculant 115 may be, besides a polymer flocculant, any flocculant as long as it can separate the neutralization solution 113 from the neutralization residue 114.

Also, besides countercurrent washing with a 6 or more stage thickener, solid-liquid separation into the neutralization solution 113 and the neutralization residue 114 may be performed using another type of solid-liquid separator.

As a method for recovering Nickel and cobalt from the neutralization solution 113, for example, adding sodium hydro sulfide, sodium sulfide, ammonium sulfide and hydrogen sulfide to the neutralization solution 113 to recover by precipitation of nickel and cobalt as a mixed sulfide as described in Japanese Laid-open patent publication No. H6-81050, or adding a hydroxide, an oxide or a carbonate to the solution to recover by precipitation of nickel and cobalt as a mixed hydroxide or mixed carbonate as described in Japanese Laid-open patent publication No. H12-234130.

As described above process, nickel and cobalt can be efficiently recovered from an oxide ore containing nickel, cobalt and iron.

There have been described one suitable embodiment of this invention. However, the present invention is not limited to the embodiments, it is, of course, apparent to the person skilled in the art that the above embodiment may be modified within the range of the present invention.

For example, although there has been described in the present embodiment a process comprising step a where the oxide ore 102 containing nickel, cobalt and iron is classified, this step may be omitted.

Also, although there has been described the use of an oxide ore containing magnesium from an over-size ore classified in step a for adjusting a pH in step c in this embodiment, the process may be performed using, for example, an oxide ore with a relatively lower nickel contents and a relatively higher magnesium contents whose nickel and magnesium contents are 1 wt% or less and 15 wt% or more, respectively, that is, which is generally not used for recovering nickel and cobalt. Here, such an oxide ore often exists in, for example, a deeper layer in a nickel and cobalt mine, and is **characterized in that** it has a relatively lower iron content. Therefore, by using the above oxide ore in step c, nickel and cobalt may be leached into a sulfuric acid solution while adjusting a pH with magnesium, to prevent amount of leached iron from being increased. As a result, while preventing reduction in a recovery rate for nickel and cobalt, a cost for recovering nickel and cobalt can be reduced. Also, a magnesium-containing substance other than an oxide ore may be used.

Although there has been described recovery of nickel and cobalt from the oxide ore 102 containing nickel, cobalt and iron in the above embodiment, nickel may be recovered from an oxide ore containing nickel and iron, while cobalt may be recovered from an oxide ore containing cobalt and iron.

Further, when adjusting a pH in accordance with step c, an oxide ore with a lower content of nickel and a higher content of magnesium may be used together with an oxide ore containing magnesium from an over-size ore classified in step a.

Also, when adjusting a pH in accordance with step c, a magnesium-containing substance other than an oxide ore may be used together with an oxide ore containing magnesium from an over-size ore classified in step a.

Also, when adjusting a pH in accordance with step c, a magnesium-containing substance other than an oxide ore may be used together with the above oxide ore with a lower content of nickel and a higher content of magnesium.

Also, when adjusting a pH in accordance with step c, an oxide ore containing magnesium from an over-size ore classified in step a may be used together with the oxide ore with a lower content of nickel and a higher content of magnesium as well as a magnesium-containing substance other than an oxide ore.

Also, in step b or step c, a reducing agent such as iron and sodium sulfite may be used to further improve a leaching rate of nickel and cobalt.

Here, as a reducing agent, for instance, iron powder, sodium sulfite and a mixture thereof can be employed. When using iron powder, it may be added in an amount within a range of not less than 0.1 wt% and not more than 1 wt%, particularly not less than 0.2 wt% and not more than 0.5 wt% to the used amount of the oxide ore 102. Here, a particle size of the iron powder may be a diameter of about 1 mm, and iron with its surface being not oxidized may be used. When using sodium sulfite, it may be added in an amount within a range of not less than 1 wt% and not more than 10 wt%, particularly not less than 5 wt% and not more than 8 wt% to the amount of the oxide ore 102.

By adding the reducing agent, within the above range, the reducing agent may be adequately effective to further efficiently improve a leaching rate of nickel and cobalt, particularly of cobalt by synergy with control in an iron concentration in another step. Thus, while reducing a cost for removing iron, a recovery rate for nickel and cobalt may be further improved.

Addition of a reducing agent would be effective for improving a leaching rate of nickel and cobalt, particularly of cobalt because of the following reason.

That is to say, cobalt in the oxide ore 102 exists as a bivalent oxide (CoO) and a trivalent oxide (CO₂O₃), and a ratio of these oxides would be dependent on a mining place. Binding state between cobalt and oxygen is stronger and more stable in CO₂O₃ than in CoO. It is, therefore, not easy to decompose the bond between cobalt and oxygen in a trivalent cobalt oxide contained in the slurry ore 104 with sulfuric acid 105. Thus, it would be estimated that by adding a reducing agent in addition to sulfuric acid 105, a binding power between cobalt and oxygen in the trivalent cobalt oxide becomes weaker and the cobalt is reduced from trivalent to bivalent, allowing cobalt to be more easily leached with sulfuric acid 105.

### (EXAMPLES)

There will be more specifically described the present invention with reference to experimental examples. In addition, the amount of each component in oxide ores in Table 2 to Table 5 is expressed as wt% to the amount of the oxide ore.

Tables 2 to 5 show the conditions and the results of each experimental examples.
(Table 2)

**Table 2**

| Exp. No. | Oxide ore component (wt%) | | | | | Ore classification rate (wt%) | | Water | Sodium salt added | | Sulfuric acid/Ore | Temperature °C | | Neutralization | |
|---|---|---|---|---|---|---|---|---|---|---|---|---|---|---|---|
| | Ni | Co | Fe | Mg | Mg/Fe | -2mm | +2mm | | material | Na/Ore | | Leaching | Reaction | Material | pH |
| A-1 | 1.87 | 0.111 | 23.4 | 11.7 | 0.50 | 72 | 28 | Marine | None | 0 | 0.73 | 95 | 95 | FeNi slag | 2.5 |
| A-2 | 1.74 | 0.107 | 27.1 | 10.5 | 0.39 | 67 | 33 | Marine | None | 0 | 0.73 | 95 | 95 | CaCO₃ | 2.5 |
| A-3 | 1.74 | 0.107 | 27.1 | 10.5 | 0.39 | 67 | 33 | Marine | None | 0 | 0.68 | 95 | 95 | Ca(OH)₂ | 2.5 |
| A-4 | 1.74 | 0.107 | 27.1 | 10.5 | 0.39 | 67 | 33 | River | Na₂SO₄ | 0.025 | 0.73 | 95 | 95 | CaCO₃ | 2.5 |
| A-5 | 1.74 | 0.107 | 27.1 | 10.5 | 0.39 | 67 | 33 | River | NaCl | 0.025 | 0.73 | 95 | 95 | Mg(OH)₂ | 3.0 |
| A-6 | 1.68 | 0.123 | 31.1 | 8.7 | 0.28 | 74 | 26 | Marine | None | 0 | 0.73 | 95 | 95 | MgCO₃ | 3.0 |
| A-7 | 1.68 | 0.123 | 31.1 | 8.7 | 0.28 | 74 | 26 | Marine | None | 0 | 0.68 | 95 | 95 | MgO | 3.0 |
| A-8 | 1.63 | 0.125 | 33.4 | 7.8 | 0.23 | 76 | 24 | Marine | None | 0 | 0.73 | 95 | 95 | CaCO₃ | 3.0 |
| A-9 | 1.63 | 0.125 | 33.4 | 7.8 | 0.23 | 76 | 24 | Marine | None | 0 | 0.63 | 95 | 95 | NaOH | 3.0 |
| A-10 | 1.63 | 0.125 | 33.4 | 7.8 | 0.23 | 76 | 24 | River | Na₂SO₄ | 0.04 | 0.73 | 95 | 95 | Na₂CO₃ | 3.0 |
| B-1 | 1.45 | 0.149 | 43.0 | 3.9 | 0.09 | 86 | 14 | Marine | None | 0 | 0.73 | 95 | 95 | CaCO₃ | 3.0 |
| B-2 | 1.74 | 0.107 | 27.1 | 10.5 | 0.39 | Not classified | | River | Na₂SO₄ | 0.025 | 0.73 | 95 | Not done | CaCO₃ | 3.0 |
| B-3 | 1.63 | 0.125 | 33.4 | 7.8 | 0.23 | Not classified | | Marine | None | 0 | 0.73 | 95 | Not done | CaCO₃ | 3.0 |
| B-4 | 1.63 | 0.125 | 33.4 | 7.8 | 0.23 | 76 | 24 | Marine | None | 0 | 0.45 | 95 | 95 | CaCO₃ | 3.0 |
| B-5 | 1.63 | 0.125 | 33.4 | 7.8 | 0.23 | 76 | 24 | Marine | None | 0 | 1.00 | 95 | 95 | CaCO₃ | 3.0 |
| Comp Ex. | 1.63 | 0.125 | 33.4 | 7.8 | 0.23 | 76 24 | | River | None | 0 | 0.73 | 95 | 95 | CaCO₃ | 3.0 |

(Table 3)

**Table 3**

| Exp. No. | Atmospheric leaching rate (wt%) | | | | Atmospheric solution | | | Neutralizing agent/Ore | Neutralization solution (g/L) | | | |
|---|---|---|---|---|---|---|---|---|---|---|---|---|
| | Ni | Co | Fe | Mg | Fe (g/L) | Fe/Ni concentration ratio | Free sulfuric acid (g/L) | | Ni | Co | Fe | Mg |
| A-1 | 90.1 | 83.2 | 0.6 | 86.6 | 0.31 | 0.05 | 9 | 0.09 | 6.25 | 0.39 | 0.18 | 44.73 |
| A-2 | 91.1 | 82.5 | 1.3 | 89.8 | 0.75 | 0.11 | 18 | 0.02 | 7.03 | 0.38 | 0.28 | 42.07 |
| A-3 | 87.9 | 70.3 | 0.5 | 87.2 | 0.27 | 0.04 | 14 | 0.01 | 6.40 | 0.36 | 0.23 | 40.55 |
| A-4 | 90.9 | 76.2 | 3.2 | 88.7 | 1.61 | 0.24 | 25 | 0.04 | 7.21 | 0.43 | 0.29 | 44.83 |
| A-5 | 91.2 | 70.9 | 5.5 | 93.1 | 5.52 | 0.90 | 28 | 0.07 | 5.87 | 0.41 | 0.29 | 31.89 |
| A-6 | 91.0 | 78.0 | 4.9 | 94.3 | 2.60 | 0.42 | 25 | 0.06 | 5.52 | 0.36 | 0.19 | 38.40 |
| A-7 | 86.9 | 75.9 | 0.9 | 89.2 | 0.54 | 0.09 | 20 | 0.02 | 5.60 | 0.35 | 0.07 | 36.84 |
| A-8 | 91.6 | 78.3 | 7.6 | 92.4 | 6.75 | 1.19 | 30 | 0.09 | 5.52 | 0.36 | 0.27 | 29.10 |
| A-9 | 84.8 | 67.8 | 1.6 | 88.3 | 1.52 | 0.27 | 15 | 0.04 | 5.18 | 0.33 | 0.05 | 29.32 |
| A-10 | 91.9 | 71.5 | 4.3 | 94.5 | 4.45 | 0.75 | 32 | 0.08 | 5.24 | 0.36 | 0.12 | 30.73 |
| B-1 | 72.6 | 63.3 | 28.6 | 92.1 | 44.57 | 11.68 | 78 | 0.45 | 4.08 | 0.37 | 0.49 | 13.06 |
| B-2 | 81.3 | 61.6 | 18.2 | 93.3 | 15.04 | 3.31 | 46 | 0.16 | 4.98 | 0.27 | 0.10 | 38.29 |
| B-3 | 85.1 | 62.7 | 17.4 | 92.2 | 17.68 | 2.63 | 43 | 0.15 | 5.15 | 0.38 | 0.19 | 30.21 |
| B-4 | 64.3 | 50.4 | 0.2 | 76.9 | 0.21 | 0.04 | 6 | 0.01 | 4.50 | 0.30 | 0.05 | 27.98 |
| B-5 | 91.8 | 80.2 | 46.7 | 95.3 | 47.54 | 8.29 | 45 | 0.44 | 4.05 | 1.44 | 0.19 | 23.79 |
| Comp. Ex. | 80.6 | 59.4 | 40.2 | 86.2 | 40.33 | 7.57 | 20 | 0.32 | 4.62 | 0.29 | 0.47 | 25.66 |

(Table 4)

**Table 4**

| Exp. No. | Oxide ore | Oxide ore component (wt%) | | | | Ore classification rate (wt%) | | Water | Sodium salt added | | Reducing agent | | | Sulfuric acid/Ore | Temperature °C | |
|---|---|---|---|---|---|---|---|---|---|---|---|---|---|---|---|---|
| | | Ni | Co | Fe | Mg | -2mm | +2mm | | Material | Na/Ore | Material | Process | Reducing agent/Ore | | Leachi ng | Reaction |
| C-1 | C | 1.65 | 0.077 | 25.4 | 10.8 | 64 | 36 | Marine | None | 0 | Iron powder | Atmospheric leaching | 0.003 | 0.73 | 95 | 95 |
| C-2 | C | 1.65 | 0.077 | 25.4 | 10.8 | 64 | 36 | Marine | None | 0 | Na sulfite | Atmospheric leaching | 0.05 | 0.73 | 95 | 95 |
| C-3 | C | 1.65 | 0.077 | 25.4 | 10.8 | 64 | 36 | River | Na₂SO₄ | 0.025 | Iron powder | Atmospheric leaching | 0.005 | 0.73 | 95 | 95 |
| C-4 | C | 1.65 | 0.077 | 25.4 | 10.8 | 64 | 36 | River | NaCl | 0.025 | Na sulfite | Atmospheric reaction | 0.08 | 0.73 | 95 | 95 |
| C-5 | C | 1.65 | 0.077 | 25.4 | 10.8 | 64 | 36 | Marine | None | 0 | Iron powder | Atmospheric reaction | 0.005 | 0.73 | 95 | 95 |
| D-1 | D | 1.71 | 0.235 | 22.7 | 11.1 | 61 | 39 | Marine | None | 0 | Iron powder | Atmospheric leaching | 0.003 | 0.73 | 95 | 95 |
| D-2 | D | 1.71 | 0.235 | 22.7 | 11.1 | 61 | 39 | Marine | None | 0 | Na sulfite | Atmospheric leaching | 0.05 | 0.73 | 95 | 95 |
| D-3 | D | 1.71 | 0.235 | 22.7 | 11.1 | 61 | 39 | River | Na₂SO₄ | 0.025 | Iron powder | Atmospheric leaching | 0.005 | 0.73 | 95 | 95 |
| D-4 | D | 1.71 | 0.235 | 22.7 | 11.1 | 61 | 39 | River | NaCl | 0.025 | Na sulfite | Atmospheric reaction | 0.08 | 0.73 | 95 | 95 |
| D-5 | D | 1.71 | 0.235 | 22.7 | 11.1 | 61 | 39 | Marine | None | 0 | Iron powder | Atmospheric reaction | 0.005 | 0.73 | 95 | 95 |

(Table 5)

**Table 5**

| Exp. No. | Oxide Ore | Atmospheric leaching rate (wt%) | | | | Atmospheric Solution (g/L) | | | |
|---|---|---|---|---|---|---|---|---|---|
| | | Ni | Co | Fe | Mg | Ni | Co | Fe | Mg |
| C-1 | C | 89.0 | 80.2 | 6.1 | 80.9 | 5.70 | 0.27 | 5.75 | 34.05 |
| C-2 | C | 89.5 | 78.1 | 2.0 | 83.8 | 5.63 | 0.26 | 1.87 | 34.01 |
| C-3 | C | 89.1 | 82.5 | 7.5 | 81.0 | 5.71 | 0.29 | 7.14 | 34.06 |
| C-4 | C | 88.0 | 82.8 | 1.3 | 80.3 | 5.88 | 0.29 | 1.16 | 35.54 |
| C-5 | C | 88.9 | 82.8 | 7.6 | 79.7 | 5.60 | 0.26 | 7.18 | 34.34 |
| D-1 | D | 92.2 | 87.0 | 5.6 | 73.8 | 6.15 | 0.80 | 5.53 | 32.39 |
| D-2 | D | 92.4 | 77.9 | 0.5 | 80.1 | 6.19 | 0.62 | 0.45 | 37.83 |
| D-3 | D | 91.1 | 95.7 | 7.4 | 70.5 | 6.08 | 0.83 | 7.16 | 34.26 |
| D-4 | D | 92.2 | 95.1 | 1.5 | 76.3 | 6.14 | 0.82 | 1.31 | 36.22 |
| D-5 | D | 88.2 | 95.8 | 7.5 | 63.7 | 5.72 | 0.79 | 6.87 | 31.06 |

### (A-1)

In the present experimental example, an oxide ore containing Ni : 1.87 %, Co : 0.111 %, Fe : 23.4 % and Mg : 11.7% in which an Mg/Fe ratio was 0.5 was used. The oxide ore was classified by a 2 mm screen into a -2 mm oxide ore and a +2 mm oxide ore in 72 wt% and 28 wt%, respectively. The whole amount of the +2 mm oxide ore was crushed into a -2 mm ore. To the -2 mm oxide ore was added marine water to obtain a 28 wt% concentration slurry ore. Then, 98 wt% concentration sulfuric acid was added in 0.73 times amount to the whole amount of the oxide ore before classification, and the mixture was stirred for 6 hours at a temperature of 95 °C and an atmospheric pressure for leaching.

To the sulfuric acid leachate and the leaching residue thus obtained was added an oxide ore as a slurry ore with a 40 wt% concentration prepared by adding marine water to the crushed ore from the +2 mm oxide ore. The mixture was reacted by stirring at a temperature of 95 °C and an atmospheric pressure for 6 hours. A leaching rate after the atmospheric-pressure reaction was checked to obtain the results: Ni: 90.1%, Co: 83.2 %, Fe: 0.6% and Mg: 86.6 %. The atmospheric-pressure reaction solution showed Fe concentration: 0.31 g/L, Fe/Ni concentration ratio : 0.05, free sulfuric acid amount : 9 g/L. An iron leaching rate was controlled while improving a leaching rate of nickel and cobalt.

To the reaction solution and the reaction residue thus obtained was added a Fe/Ni slag (ferronickel slag) with Ni : 0.05 Fe : 5.5 % and Mg : 20.4 % as a neutralizing agent with stirring until a pH became 2.5, for a neutralization reaction. The amount of the neutralizing agent used was 0.09 times of the total amount of the oxide ore.

Next, to the neutralization solution and the neutralization residue was added a polymer flocculant to flocculate the neutralization residue, which was then spontaneously precipitated. Then, the neutralization solution and the neutralization residue were separated into a solid and a liquid. Concentrations of components in the neutralization solution were Ni : 6.25 g/L, Co : 0.39 g/L, Fe : 0.18 g/L and Mg : 44.73 g/L.

### (A-2)

An experiment was performed under the same conditions described in A-1, except that an oxide ore classified by a 2 mm screen and the oxide ore which contains Ni : 1.74 %, Co : 0.107 %, Fe : 27.1 % and Mg : 10.5 % and in which an Mg/Fe ratio was 0.39 was used, and CaCO₃ was used as a neutralizing agent.

### (A-3)

An experiment was performed under the same conditions described in A-2, except that sulfuric acid was used in 0.68 times amount to the total amount of the oxide ore and Ca(OH)₂ was used as a neutralizing agent.

### (A-4)

An experiment was performed under the same conditions described in A-2, except that water was river water; Na₂SO₄ was used as a sodium salt; and the sodium amount was 0.025 times to the total amount of the oxide ore.

### (A-5)

An experiment was performed under the same conditions described in A-2, except that water was river water; NaCl was used as a sodium salt; the sodium amount was 0.025 times to the total amount of the oxide ore; Mg(OH)₂ was used as a neutralizing agent; and a neutralization pH was 3.0.

### (A-6)

An experiment was performed under the same conditions described in A-1, except that a -2 mm oxide ore in 74 wt% and a +2 mm oxide ore in 26 wt% obtained by classifying with a 2 mm screen from an oxide ore was used. The oxide ore contains Ni : 1.68 %, Co : 0.123 %, Fe : 31.1 % and Mg : 8.7 % and an Mg/Fe ratio of the oxide ore was 0.28; MgCO₃ was used as a neutralizing agent; and a pH was 3.0.

### (A-7)

An experiment was performed under the same conditions described in A-6, except that the sulfuric acid amount was 0.68 times to the total amount of the oxide ore and MgO was used as a neutralizing agent.

### (A-8)

An experiment was performed under the same conditions described in A-1, except that a -2 mm oxide ore in 76 wt% and a +2 mm oxide ore in 24 wt% obtained by classifying with a 2 mm screen from an oxide ore was used. The oxide ore contains Ni : 1.63 %, Co : 0.125 %, Fe : 33.4 % and Mg: 7.8 % and an Mg/Fe ratio of the oxide ore was 0.23; CaCO₃ was used as a neutralizing agent; and a pH was 3.0.

### (A-9)

An experiment was performed under the same conditions described in A-8, except that the sulfuric acid amount was 0.63 times to the total amount of the oxide ore and NaOH was used as a neutralizing agent.

### (A-10)

An experiment was performed under the same conditions described in A-8, except that water was river water; Na₂SO₄ was used as a sodium salt; the amount of the sodium salt was 0.04 times to the total amount of the oxide ore; and Na₂CO₃ was used as a neutralizing agent.

With described above, in the above experiment No. A-1 to A-10, improvement in a leaching rate for nickel and cobalt and control of a leaching rate for iron were achieved and a nickel sulfate solution and a cobalt sulfate solution with a lower iron content were obtained. Thus, iron could be removed with a reduced amount of a neutralizing agent.

### (B-1)

The present experimental example was performed under the same conditions described in A-1, except that a -2 mm oxide ore in 86 wt% and a +2 mm oxide ore in 14 wt% obtained by classifying with a 2 mm screen from an oxide ore. The oxide ore contains Ni : 1.45 %, Co: 0.149 %, Fe : 43 % and Mg : 3.9 % and an Mg/Fe ratio of the oxide ore was 0.09; CaCO₃ was used as a neutralizing agent; and a pH was 3.0. With a low Mg/Fe ratio of 0.09 in an oxide ore, a leaching rate of nickel is decreased while a leaching rate of iron is increased. An iron concentration and a free sulfuric acid amount in an atmospheric pressure solution are increased and the amount of a neutralizing agent used is increased.

### (B-2)

The present experimental example was performed under the same conditions described in A-4, except that classification with a 2 mm screen and the reaction step were not performed and a pH of the neutralization solution was 3.0. When not performing screening of the oxide ore and leaching all the ore with sulfuric acid at a time, that is, not performing the classification step, a leaching rate of nickel is decreased and a leaching rate of iron is increased, an iron concentration and a free sulfuric acid amount in an atmospheric-pressure solution is increased and the amount of the neutralizing agent used is increased.

### (B-3)

The present experimental example was performed under the same conditions described in A-8, except that classification with a 2 mm screen and the reaction process were not performed. When not performing screening of the oxide ore and leaching all the ore with sulfuric acid at a time, that is, not performing the reaction step, a leaching rate of nickel is decreased and a leaching rate of iron is increased, an iron concentration and the amount of a free sulfuric acid in an atmospheric-pressure solution are increased and the amount of the neutralizing agent used is increased.

### (B-4)

The present experimental example was performed under the same conditions described in A-8, except that the amount of sulfuric acid was 0.45 times to the total amount of the oxide ore before classification. When sulfuric acid is used in such a low amount that a sulfuric acid/oxide ore ratio is 0.45, leaching rates of nickel and cobalt are decreased.

### (B-5)

The present experimental example was performed under the same conditions described in A-8, except that the amount of sulfuric acid was 1.00 time to the total amount of the oxide ore before classification. When sulfuric acid is used in such a high amount that a sulfuric acid/oxide ore ratio is 1.00, a leaching rate of iron is increased; an iron concentration and the amount of free sulfuric acid in the atmospheric-pressure solution are increased; and the amount of the neutralizing agent is increased.

### (Comparative Example)

This comparative example was performed as described in A-8, except that water was river water and a sodium salt was not added. Here, a leaching rate of nickel is decreased; a leaching rate of iron is increased; an iron concentration in the atmospheric-pressure solution is increased; and the amount of the neutralizing agent is increased.

When a leaching temperature and a reaction temperature were 60 °C, a leaching rate of nickel and cobalt tended to be slightly decreased in comparison with other experimental examples.

In C-1 to C-5, oxide ore C (Ni : 1.65 %, Co : 0.077 %, Fe : 25.4 %, Mg: 10.8 %) was used.

In D-1 to D-5, oxide ore D (Ni : 1.71 %, Co : 0.235 %, Fe : 22.7 %, Mg: 11.1%) from a different mine from the oxide ore C was used.

### (C-1)

Oxide ore C was classified with a 2 mm screen into a -2 mm oxide ore and a +2 mm oxide ore in 64 wt% and 36 wt%, respectively. The whole amount of the +2 mm oxide ore was crushed into a -2 mm ore. To the -2 mm oxide ore was added marine water to obtain a slurry with a concentration of 28 wt%. Then, 98 wt% concentration sulfuric acid was added in 0.73 times to the total amount of the oxide ore before classification and the iron powder was added in 0.003 times amount to the total amount of the oxide ore before classification. Then, the mixture was leached by stirring for 6 hours at a temperature of 95 °C and an atmospheric pressure.

To the sulfuric acid leachate and the leaching residue obtained by the above-described process was added a crushed ore from the +2 mm oxide ore as a 40 wt% concentration slurry with marine water, and the mixture was reacted by stirring for 6 hours at a temperature of 95 °C and an atmospheric pressure. Leaching rates after the reaction were checked to obtain the results: Ni : 89 %, Co : 80.2 %, Fe : 6.1 % and Mg : 80.9 %, and concentrations in the reaction solution were Ni : 5.70 g/L, Co : 0.27 g/L, Fe : 5.75 g/L and Mg : 34.05 g/L. Thus, for both nickel and cobalt, a leaching rate was good.

### (C-2)

The present experimental example was performed under the same conditions described in C-1 with the same oxide ore as that of C-1, except that in the leaching step, sodium sulfite was used in 0.05 times amount to the total amount of the oxide ore.

### (C-3)

The present experimental example was performed under the same conditions described in C-1 with the same oxide ore as that of C-1, except that water was river water; Na₂SO₄ as a sodium salt was used in 0.025 times amount to the total amount of the oxide ore; and in the leaching step, iron powder was added in 0.005 times amount to the total amount of the oxide ore.

### (C-4)

The present experimental example was performed under the same conditions described in C-1 with the same oxide ore as that of C-1, except that water was river water;, NaCl as a sodium salt was used in 0.025 times amount to the total amount of the oxide ore; and in the reaction step, sodium sulfite was added in 0.08 times amount to the total amount of the oxide ore.

### (C-5)

The present experimental example was performed under the same conditions described in C-1 with the same oxide ore as that of C-1, except that in the reaction step, iron powder was added in 0.005 times amount to the total amount of the oxide ore.

With described above, for oxide ore C, by adding iron powder or sodium sulfite, leaching rates of nickel and cobalt were further improved.

### (D-1)

Oxide ore D was classified with a 2 mm screen into a -2 mm oxide ore and a +2 mm oxide ore in 61 wt% and 39 wt%, respectively. The whole amount of the +2 mm oxide ore was crushed into a -2 mm ore. To the -2 mm oxide ore was added marine water to obtain a slurry with a concentration of 28 wt%. Then, 98 wt% concentration sulfuric acid was added in 0.73 times and iron powder was added in 0.003 times amounts to the total amount of the oxide ore before classification. Then, the mixture was leached by stirring for 6 hours at a temperature of 95 °C and an atmospheric pressure. To the sulfuric acid leachate and the leaching residue was added a crushed ore from the +2 mm oxide ore as a 40 wt% concentration slurry with marine water, and the mixture was reacted by stirring for 6 hours at a temperature of 95 °C and an atmospheric pressure.

Leaching rates after the reaction were checked to obtain the results: Ni: 92.2 %, Co: 87 %, Fe: 5.6 % and Mg: 73.8%, and concentrations in the reaction solution were Ni : 6.15 g/L, Co : 0.8 g/L, Fe : 5.53 g/L and Mg: 32.39 g/L. Thus, for both nickel and cobalt, a leaching rate was further improved.

### (D-2)

The present experimental example was performed under the same conditions described in D-1 with the same oxide ore as that of D-1, except that in the leaching step, sodium sulfite was used in 0.05 times amount to the total amount of the oxide ore.

### (D-3)

The present experimental example was performed under the same conditions described in D-1 with the same oxide ore as that of D-1, except that water was river water; Na₂SO₄ as a sodium salt was used in 0.025 times amount to the total amount of the oxide ore; and in the leaching step, iron powder was added in 0.005 times amount to the total amount of the oxide ore.

### (D-4)

The present experimental example was performed under the same conditions described in D-1 with the same oxide ore as that of D-1, except that water was river water; NaCl as a sodium salt was used in 0.025 times amount to the total amount of the oxide ore; and in the reaction step, sodium sulfite was added in 0.08 times amount to the total amount of the oxide ore.

### (D-5)

The present experimental example was performed under the same conditions described in D-1 with the same oxide ore as that of D-1, except that in the reaction step, iron powder was added in 0.005 times amount to the total amount of the oxide ore.

With described above, for the oxide ore C and the oxide ore D, by adding iron powder or sodium sulfite, leaching rates of nickel and cobalt could be further improved.

## Claims

1. A process for recovering nickel and cobalt from an oxide ore containing nickel or cobalt and iron, comprising:
a leaching step where nickel or cobalt is leached from said oxide ore using sulphuric acid and a sodium salt to obtain a sulphuric acid leachate containing nickel or cobalt and a leaching residue;
a reaction step where said sulphuric acid leachate containing said leachate residue is reacted with magnesium-containing oxide substance for adjusting pH to obtain a reaction solution containing nickel or cobalt and a reaction residue containing iron; and
a neutralization step where said reaction solution containing said reaction residue is neutralized with a neutralizing agent to obtain a neutralization solution containing nickel or cobalt and a neutralization residue containing iron.
**characterized in that** the weight ratio between sulphuric acid added in the leaching step and the oxide ore is from 0.5 to 0.8 and the weight ratio between sodium salt added in the leaching step and oxide ore is from 0.01 to 0.05 .

2. The process according to claim 1, comprising:
classifying said oxide ore into a small particle oxide ore and a large particle oxide ore containing magnesium before said leaching step;
wherein nickel or cobalt are leached from said small particle oxide ore in said leaching step; and
said sulfuric acid leachate containing said leaching residue is reacted with magnesium contained in said large particle oxide ore to adjust pH in said reaction step.

3. The process according to claim 1 or 2, further comprising:
separating said neutralization solution and said neutralization residue by solid-liquid separation using a thickener with a flocculent after said neutralization step.

4. The process according to any one of claims 1 to 3, wherein both said leaching step and said reaction step are performed at a temperature of 90 °C or higher.

5. The process according to any one of claims 1 to 4, wherein both said leaching step and said reaction step are performed at an atmospheric pressure.

6. The process according to any one of claims 1 to 5, wherein said magnesium-containing oxide substance is magnesium-containing oxide ore.

7. The process according to any one of claims 1 to 6, wherein said sodium salt is a sodium salt contained in marine water.

## Patentansprüche

1. Verfahren zur Gewinnung von Nickel und Cobalt aus einem Nickel oder Cobalt sowie Eisen enthaltenden Oxiderz, umfassend:
einen Laugungsschritt, bei dem Nickel oder Cobalt aus diesem Oxiderz unter Verwendung von Schwefelsäure und einem Natriumsalz ausgelaugt werden, um eine schwefelsaure, Nickel oder Cobalt enthaltende Laugungslösung sowie einen Laugungsrückstand zu erhalten;
einen Reaktionsschritt, bei dem diese schwefelsaure, einen Laugungsrückstand enthaltende Laugungslösung zum Einstellen des pH-Werts mit einer oxidischen, Magnesium enthaltenden Substanz zur Reaktion gebracht wird, um eine Nickel oder Cobalt enthaltende Reaktionslösung und einen Eisen enthaltenden Reaktionsrückstand zu erhalten; und
einen Neutralisationsschritt, bei dem diese den Reaktionsrückstand enthaltende Reaktionslösung mit einem Neutralisationsmittel neutralisiert wird, um eine Nickel oder Cobalt enthaltende Neutralisationslösung und einen Eisen enthaltenden Neutralisationsrückstand zu erhalten, **dadurch gekennzeichnet, dass** das Gewichtsverhältnis zwischen im Laugungsschritt zugegebener Schwefelsäure und dem Oxiderz von 0,5 bis 0,8 beträgt und das Gewichtsverhältnis zwischen im Laugungsschritt zugegebenen Natriumsalz und Oxiderz von 0,01 bis 0,05 beträgt.

2. Verfahren nach Anspruch 1 umfassend:
Auftrennen des Oxiderzes in ein Oxiderz mit kleinen Partikeln und ein Oxiderz mit großen Partikeln, die vor dem Laugungsschritt Magnesium enthalten;
wobei Nickel oder Cobalt in dem Auslaugungsschritt aus dem Oxiderz mit kleinen Partikeln ausgelaugt werden; und
die schwefelsaure, den Laugungsrückstand enthaltende Laugungslösung mit dem im Oxiderz mit großen Partikeln enthaltenen Magnesium zur Reaktion gebracht wird, um den pH-Wert im genannten Reaktionsschritt einzustellen.

3. Verfahren nach Anspruch 1 oder 2, des Weiteren umfassend:
Trennung der Neutralisationslösung und des Neutralisationsrückstands durch eine Fest-Flüssig-Trennung unter Verwendung eines Verdickungsmittels mit einem Flockungsmittel nach diesem Neutralisationsschritt.

4. Verfahren nach einem der Ansprüche 1 bis 3, wobei sowohl der Laugungsschritt als auch der Reaktionsschritt bei einer Temperatur von 90 °C oder höher durchgeführt werden.

5. Verfahren nach einem der Ansprüche 1 bis 4, wobei sowohl der Laugungsschritt als auch der Reaktionsschritt bei einem Atmosphärendruck durchgeführt werden.

6. Verfahren nach einem der Ansprüche 1 bis 5, wobei die oxidische, Magnesium enthaltende Substanz ein Magnesium enthaltendes Oxiderz ist.

7. Verfahren nach einem der Ansprüche 1 bis 6, wobei das Natriumsalz ein in Meerwasser enthaltenes Natriumsalz ist.

## Revendications

1. Procédé de récupération de nickel et de cobalt à partir d'un minerai d'oxyde contenant du nickel ou du cobalt et du fer, comprenant :
une étape de lixiviation dans laquelle le nickel ou le cobalt est lixivié dudit minerai d'oxyde en utilisant de l'acide sulfurique et un sel de sodium pour obtenir un lixiviat d'acide sulfurique contenant du nickel ou du cobalt et un résidu de lixiviation ;
une étape réactionnelle dans laquelle ledit lixiviat d'acide sulfurique contenant ledit résidu de lixiviat réagit avec une substance d'oxyde contenant du magnésium pour ajuster le pH de façon à obtenir une solution réactionnelle contenant du nickel ou du cobalt et un résidu réactionnel contenant du fer ; et
une étape de neutralisation dans laquelle ladite solution réactionnelle contenant ledit résidu réactionnel est neutralisée avec un agent neutralisant pour obtenir une solution neutralisante contenant du nickel ou du cobalt et un résidu de neutralisation contenant du fer,
**caractérisé en ce que** le rapport en poids entre l'acide sulfurique ajouté à l'étape de lixiviation et le minerai d'oxyde est de 0,5 à 0,8 et le rapport en poids entre le sel de sodium ajouté à l'étape de lixiviation et le minerai d'oxyde est de 0,01 à 0,05.

2. Procédé selon la revendication 1, comprenant :
la classification dudit minerai d'oxyde en petites particules de minerai d'oxyde et grandes particules de minerai d'oxyde contenant du magnésium avant ladite étape de lixiviation ;
dans lequel lesdits nickel ou cobalt sont lixiviés desdites petites particules de minerai d'oxyde dans ladite étape de lixiviation ; et
ledit lixiviat d'acide sulfurique contenant ledit résidu de lixiviation réagit avec le magnésium contenu dans lesdites grandes particules oxyde pour ajuster le pH dans ladite étape réactionnelle.

3. Procédé selon la revendication 1 ou 2, comprenant en outre :
la séparation de ladite solution de neutralisation et dudit résidu de neutralisation par séparation solide - liquide en utilisant un épaississant avec un floculant après ladite étape de neutralisation.

4. Procédé selon l'une quelconque des revendications 1 à 3, dans lequel ladite étape de lixiviation et ladite étape réactionnelle sont réalisées à une température de 90° C ou supérieure.

5. Procédé selon l'une quelconque des revendications 1 à 4, dans lequel ladite étape de lixiviation et ladite étape réactionnelle sont réalisées à pression atmosphérique.

6. Procédé selon l'une quelconque des revendications 1 à 5, dans lequel ladite substance d'oxyde contenant du magnésium est un minerai d'oxyde contenant du magnésium.

7. Procédé selon l'une quelconque des revendications 1 à 6, dans lequel ledit sel de sodium est un sel de sodium contenu dans l'eau de mer.
